# EUROPÄISCHE PATENTSCHRIFT

(11) **EP 1 019 273 B1**
(45) Veröffentlichungstag und Bekanntmachung des Hinweises auf die Patenterteilung: **17.09.2003**
(21) Anmeldenummer: 98954339.2
(22) Anmeldetag: 05.10.1998
(51) Int. Cl.: B60T 13/57

(54) **PNEUMATISCHER BREMSKRAFTVERSTÄRKER FÜR KRAFTFAHRZEUGE**
PNEUMATIC BRAKE POWER BOOSTER FOR AUTOMOBILES
SERVOFREIN PNEUMATIQUE DESTINE AUX VEHICULES AUTOMOBILES

(30) Priorität: 04.10.1997 DE 19743843
(43) Veröffentlichungstag der Anmeldung: 19.07.2000
(73) Patentinhaber: Continental Teves AG & Co. oHG, 60488 Frankfurt (DE)
(72) Erfinder: FEIGEL, Hans-Jörg, D-61191 Rosbach (DE); SCHONLAU, Jürgen, D-65396 Walluf (DE); LINKENBACH, Steffen, D-65760 Eschborn (DE)
(86) Internationale Anmeldenummer: EP9806324
(87) Internationale Veröffentlichungsnummer: WO99017968

(56) Entgegenhaltungen:
- WO-A1-94/00325
- WO-A1-95/01272
- US-A- 5 645 145

## Beschreibung

Die Erfindung betrifft einen pneumatischen Bremskraftverstärker für Kraftfahrzeuge mit einem Verstärkergehäuse, dessen Innenraum durch eine bewegliche Wand in eine erste Kammer (Unterdruckkammer) und eine zweite Kammer (Arbeitskammer) unterteilt ist, sowie mit einem Steuergehäuse, in dem ein eine auf die bewegliche Wand einwirkende pneumatische Druckdifferenz steuerndes, mittels einer Betätigungsstange betätigbares Steuerventil angeordnet ist, das einen am Steuergehäuse ausgebildeten ersten Dichtsitz, einen an einem Ventilkolben ausgebildeten zweiten Dichtsitz sowie einen mit beiden Dichtsitzen zusammenwirkenden elastischen Ventilkörper aufweist, wobei Mittel vorgesehen sind, die bei einer schnellen Betätigung des Steuerventils einen sprunghaften Anstieg der vom Bremskraftverstärker aufgebrachten Verstärkungskraft gewährleisten.

Ein derartiger Bremskraftverstärker ist z. B. aus der US-A-5,645,145 bekannt. Der Ventilkolben des vorbekannten Bremskraftverstärkers wirkt bei der Betätigung mit einem hydraulischen Kolben zusammen, der zusammen mit einem Kraftabgabeglied bzw. einer Druckstange eine erste hydraulische Kammer begrenzt. Auf der der ersten Kammer abgewandten Seite des hydraulischen Kolbens ist eine zweite hydraulische Kammer ausgebildet, die über mehrere Kanäle mit der ersten Kammer in Verbindung steht, wobei die Verbindung mittels einer Ventileinrichtung absperrbar ist. Am hydraulischen Kolben stützt sich unter Vorspannung einer Druckfeder ein zweiter hydraulischer Kolben bzw. Ringkolben axial ab, der ein Verdrängen des Flüssigkeitsvolumens aus der zweiten Kammer in die erste Kammer ermöglicht. Die beschriebene Anordnung stellt demnach eine hydraulische Reaktionseinrichtung dar. Die vorhin erwähnte Ventileinrichtung ist dabei vorzugsweise derart ausgebildet, daß sie bei einer "normalen" Betätigung geschlossen bleibt, so daß eine Übertragung sowohl der am Ventilkolben eingeleiteten Betätigungskraft als auch der vom Bremskraftverstärker aufgebrachten Verstärkungskraft mittels des in der ersten Kammer eingeschlossenen Flüssigkeitsvolumens stattfindet. Bei einer schnellen Betätigung, die z. B. auf eine Panikbremsung bzw. Notbremsung zurückzuführen ist, bleibt die Ventileinrichtung offen, so daß ein Verdrängen der Flüssigkeit aus der ersten Kammer in die zweite Kammer stattfindet und der sich am ersten hydraulischen Kolben abstützende Ventilkolben einen längeren Betätigungsweg zurücklegen kann, der eine Vergrößerung des Öffnungsspaltes zwischen dem zweiten Dichtsitz und einem Ventilkörper und somit eine schnellere Belüftung der belüftbaren Arbeitskammer des vorbekannten Bremskraftverstärkers zur Folge hat.

Als nachteilig ist bei dem vorbekannten Bremskraftverstärker insbesondere der komplizierte Aufbau der erwähnten Mittel bzw. der Reaktionseinrichtung anzusehen, deren Kammern mittels Dichtelemente abgedichtet werden müssen, die eine Erhöhung der im System entstehenden Reibung verursachen und außerdem eine potentielle Störungsquelle darstellen. Nicht unproblematisch scheint auch die Befüllung der hydraulischen Kammer mit flüssigem Druckmittel, die insbesondere für eine Großserienfertigung ungeeignet ist.

Aus der WO 95/01272 ist ein pneumatischer Bremskraftverstärker für Kraftfahrzeuge bekannt, der ein nachgiebiges Mittel aufweist, welches bei der schnellen Betätigung des Steuerventils durch eine Veränderung von Wirkflächen eine Steigerung des Verstärkungsverhältnisses ermöglicht.

Es ist daher Aufgabe der vorliegenden Erfindung, Maßnahmen vorzuschlagen, durch die die Betriebssicherheit sowie die Lebensdauer des Bremskraftverstärkers erhöht werden. Außerdem soll der vorgeschlagene Bremskraftverstärker mit vertretbarem Aufwand hergestellt werden können.

Diese Aufgabe wird erfindungsgemäß dadurch gelöst, daß der Ventilkolben zweiteilig ausgebildet ist und aus einem mit der Betätigungsstange zusammenwirkenden ersten Teil (Betätigungsteil) sowie einem durch das erste Teil verschiebbaren, den zweiten Dichtsitz tragenden zweiten Teil (Hülse) besteht, wobei die Mittel bei einem vorbestimmbaren Abstand des zweiten Dichtsitzes vom Ventilkörper eine kraftübertragende Verbindung des zweiten Teiles mit dem Steuergehäuse ermöglichen und ihre Wirkung durch eine Bewegung des Ventilkolbens entgegen der Betätigungsrichtung des Steuerventils abschaltbar ist.

Zur Konkretisierung des Erfindungsgedankens ist vorgesehen, daß die vorhin erwähnten Mittel durch elastische Rasthaken gebildet sind, die eine am Steuergehäuse oder an einem mit dem Steuergehäuse zusammenwirkenden Bauteil ausgebildete radiale Stufe bzw. im Steuergehäuse ausgebildete Ausnehmungen hintergreifen und dadurch ein Mitnehmen des zweiten Teiles vom Steuergehäuse ermöglichen. Das zweite Teil liegt dabei vorzugsweise am ersten Teil unter Vorspannung einer Feder axial an, die sich am Steuergehäuse abstützt.

Bei einer vorteilhaften Weiterbildung erfolgt das Lösen der kraftübertragenden Verbindung durch radiales Verstellen der Rasthaken außer Eingriff mit dem Steuergehäuse. Zu diesem Zweck wirken die Rasthaken mit einem Abschaltelement zusammen, das am ersten Teil angeordnet ist.

Bei einer anderen vorteilhaften Ausgestaltung des Erfindungsgegenstandes ist ein zweites Mittel vorgesehen, das in Abhängigkeit von der Ausgangskraft des Bremskraftverstärkers Änderungen des vorbestimmbaren Abstands ermöglicht. Das zweite Mittel wird dabei mit Vorteil durch eine Schiebehülse gebildet, die mit einer sowohl die Betätigungskraft als auch die Verstärkungskraft des Bremskraftverstärkers auf ein Ausgangsglied (Druckstange) übertragenden elastischen Reaktionsscheibe zusammenwirkt und unter Vorspannung einer zweiten Feder im Steuergehäuse begrenzt verschiebbar geführt ist.

Die Erfindung wird in der nachfolgenden Beschreibung an zwei Ausführungsbeispielen im Zusammenhang mit der beiliegenden Zeichnung näher erläutert. In der Zeichnung zeigt:
- Fig. 1: eine erste Ausführung des erfindungsgemäßen Bremskraftverstärkers im Längsschnitt, teilweise weggebrochen, in der inaktiven Bereitschaftsstellung;
- Fig. 2: die Steuergruppe des Bremskraftverstärkers gemäß Fig. 1 in einer aktiven Notbremsstellung;
- Fig. 3: die in Fig. 2 gezeigte Steuergruppe in einer Rückhubstellung, d.h., nach Wegnahme der Betätigungskraft, und
- Fig. 4: eine zweite Ausführung des erfindungsgemäßen Bremskraftverstärkers im Längsschnitt, teilweise weggebrochen, in der aktiven Notbremsstellung.

Das lediglich schematisch angedeutete Verstärkergehäuse 1 des in der Zeichnung dargestellten erfindungsgemäßen Unterdruckbremskraftverstärkers ist durch eine nicht gezeigte axial bewegliche Wand in eine Unterdruckkammer 2 und eine Arbeitskammer 3 unterteilt. Die nicht gezeigte axial bewegliche wand besteht aus einem Membranteller und einer daran anliegenden, lediglich teilweise angedeuteten flexiblen Membran 4, die nicht näher dargestellt zwischen dem äußeren Umfang des Membrantellers und dem Verstärkergehäuse 1 eine Rollmembran als Abdichtung bildet.

Ein durch eine Betätigungsstange 7 betätigbares Steuerventil 5 ist in einem im Verstärkergehäuse 1 abgedichtet geführten, die bewegliche Wand tragenden Steuergehäuse 8 untergebracht und besteht aus einem am Steuergehäuse 8 ausgebildeten ersten Dichtsitz 15, einem an einem mit der Betätigungsstange 7 verbundenen Ventilkolben 6 ausgebildeten zweiten Dichtsitz 16 sowie einem mit beiden Dichtsitzen 15,16 zusammenwirkenden, in einem im Steuergehäuse 8 abgedichtet angeordneten Führungsteil 21 geführten Ventilkörper 10, der mittels einer sich am Führungsteil 21 abstützenden Ventilfeder 22 gegen die Ventilsitze 15,16 gedrückt wird. Die Arbeitskammer 3 ist mit der Unterdruckkammer 2 über einen seitlich im Steuergehäuse 8 verlaufenden Kanal 29 verbindbar.

Die Bremskraft wird über eine stirnseitig an einem Vorderteil 14 des Steuergehäuses 8 anliegende gummielastische Reaktionsscheibe 9 sowie eine einen Kopfflansch 13 aufweisende Druckstange 12 auf einen Betätigungskolben eines nicht dargestellten Hauptzylinders der Bremsanlage übertragen, der an der unterdruckseitigen Verstärkergehäusehälfte angebracht ist.

Eine in der Zeichnung schematisch dargestellte Rückstellfeder 17, die sich an der unterdruckseitigen Stirnwand des Verstärkergehäuses 1 abstützt, hält die bewegliche Wand in der gezeigten Ausgangsstellung. Außerdem ist eine zweite Druckfeder bzw. Kolbenstangenrückholfeder 18 vorgesehen, die einerseits indirekt an der Betätigungsstange 7 und andererseits am Führungsteil 21 abgestützt ist und deren Kraft für eine Vorspannung des Ventilkolbens 6 bzw. seines Dichtsitzes 16 gegenüber dem Ventilkörper 10 sorgt.

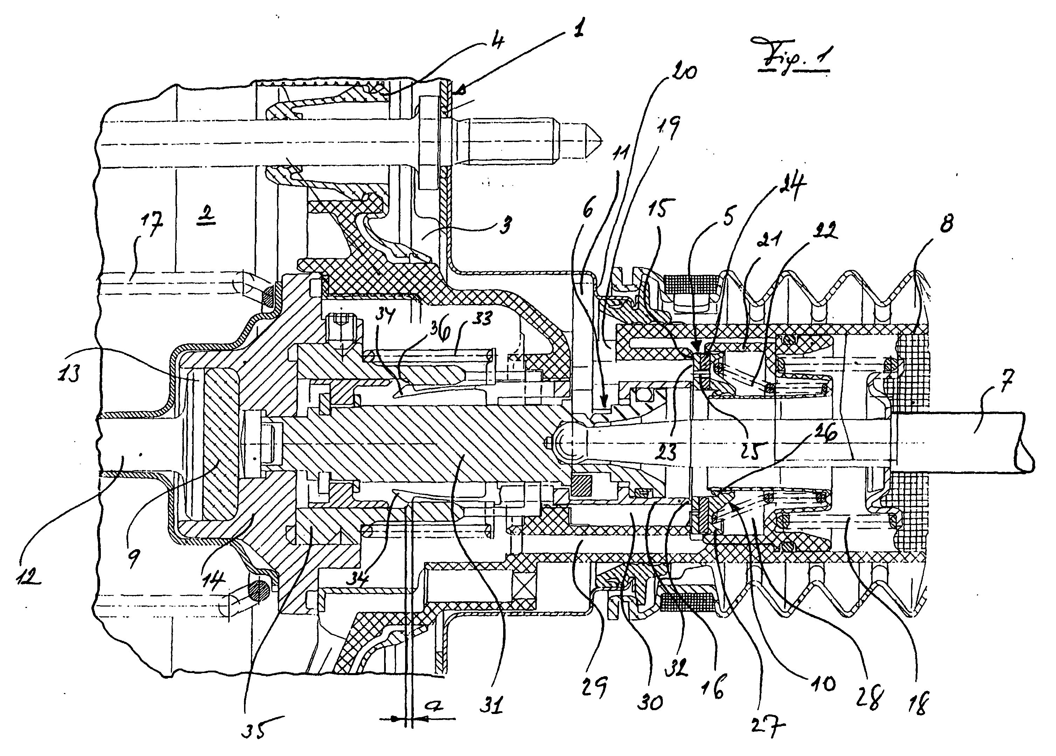

Um die Arbeitskammer 3 bei der Betätigung des Steuerventils 5 mit der Atmosphäre verbinden zu können, ist schließlich im Steuergehäuse 8 ein annähernd radial verlaufender Kanal 19 ausgebildet. Die Rückkehrbewegung des Ventilkolbens 9 am Ende eines Bremsvorganges wird dabei durch ein Querglied 11 begrenzt, das in der in Fig. 1 gezeigten Bereitschaftsstellung des Unterdruckbremskraftverstärkers an einem im Verstärkergehäuse 1 ausgebildeten Anschlag 20 anliegt.

Wie der Zeichnung weiter zu entnehmen ist, weist der Ventilkörper 10 eine mit den beiden Dichtsitzen 15,16 zusammenwirkende ringförmige Dichtfläche 23 auf, die mittels einer metallischen Versteifungsscheibe 24 versteift ist und mit mehreren axialen Durchlässen 25 versehen ist. Außerdem weist der Ventilkörper 10 eine radial innen ausgebildete Dichtlippe 26 sowie eine radial außen ausgebildete zweite Dichtlippe 27 auf, die im montierten Zustand des Ventilkörpers 10 im Steuergehäuse 8 an dem vorhin erwähnten, den Ventilkörper 10 führenden Führungsteil 21 dichtend anliegen, so daß im Steuergehäuse 8 ein pneumatischer Raum 28 begrenzt ist. Die durch die Durchlässe 25 und Öffnungen in der Dichtfläche 23 gebildeten, näher nicht bezeichneten Strömungskanäle verbinden den pneumatischen Raum 28 mit einem durch die Dichtsitze 15,16 begrenzten Ringraum 30, in dem der oben erwähnte pneumatische Kanal 29 mündet, so daß der auf der der Dichtfläche 23 abgewandten Seite des Ventilkörpers 10 ausgebildete pneumatische Raum 28 ständig mit der Arbeitskammer 3 in Verbindung steht und am Ventilkörper 10 ein Druckausgleich stattfindet.

Die beschriebene Anordnung ermöglicht demnach eine Verringerung der Differenz zwischen der Ansprechkraft des Bremskraftverstärkers und der am Ventilkolben wirkenden Rückstellkraft in dem Sinne, daß bei einer gleichbleibenden Ansprechkraft eine Erhöhung der Rückstellkraft oder bei einer gleichbleibenden Rückstellkraft eine Verringerung der Ansprechkraft möglich ist.

Wie Fig. 1 weiter eindeutig erkennen läßt, ist der vorhin erwähnte Ventilkolben 6 zweiteilig ausgebildet und besteht vorzugsweise aus einem ersten Teil bzw. einem Betätigungsteil 31 sowie einem koaxial zum ersten Teil 31 angeordneten zweiten Teil bzw. einer Hülse 32. Das Betätigungsteil 31 dient der Einleitung einer an einem nicht gezeigten Bremspedal vom Fahrer aufgebrachten Betätigungskraft und ist mit der vorhin erwähnten Betätigungsstange 7 fest verbunden. Die den zweiten Dichtsitz 16 tragende Hülse 32 ist unter gleichzeitiger Abdichtung auf dem ersten Teil 31 begrenzt verschiebbar angeordnet und liegt unter Vorspannung einer Feder 33 am ersten Teil 31 axial an, so daß sie beim Verschieben des Betätigungsteiles 31 in der Zeichnung nach links von diesem mitgenommen werden kann. Dadurch hebt der zweite Dichtsitz 16 von der Dichtfläche 23 des Ventilkörpers 10 ab, so daß die Arbeitskammer 3 belüftet wird. Das der Hülse 32 abgewandte Ende der Feder 33 stützt sich dabei an einem mit dem Steuergehäuse-Vorderteil 14 fest verbundenen Bauteil 35 ab.

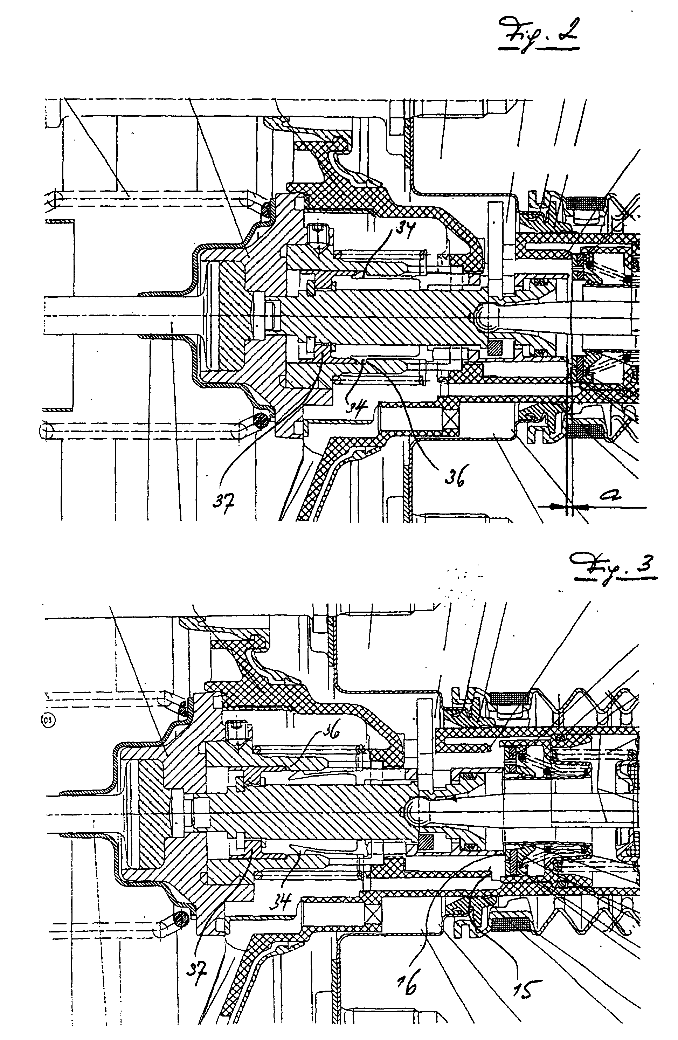

Um bei einer schnellen Betätigung eine Vergrößerung des Abstandes zwischen dem zweiten Dichtsitz 16 und dem Ventilkörper 10 zu erreichen, ist die Hülse 32 an ihrem dem Ventilkörper 10 abgewandten Ende mit radial elastischen Rasthaken 34 versehen, die, nachdem die Hülse 32 bei einer schnellen Relativbewegung des Ventilkolbens 6 gegenüber dem Steuergehäuse 8 einen Weg "a" zurückgelegt hat, mit einer am Bauteil 35 ausgebildeten Ringfläche bzw. radialen Stufe 36 in Eingriff gebracht werden, so daß die Hülse 32 vom Steuergehäuse 35 bzw. 8 mitgenommen wird. Die beschriebene Betätigungsstellung ist in Fig. 2 dargestellt.

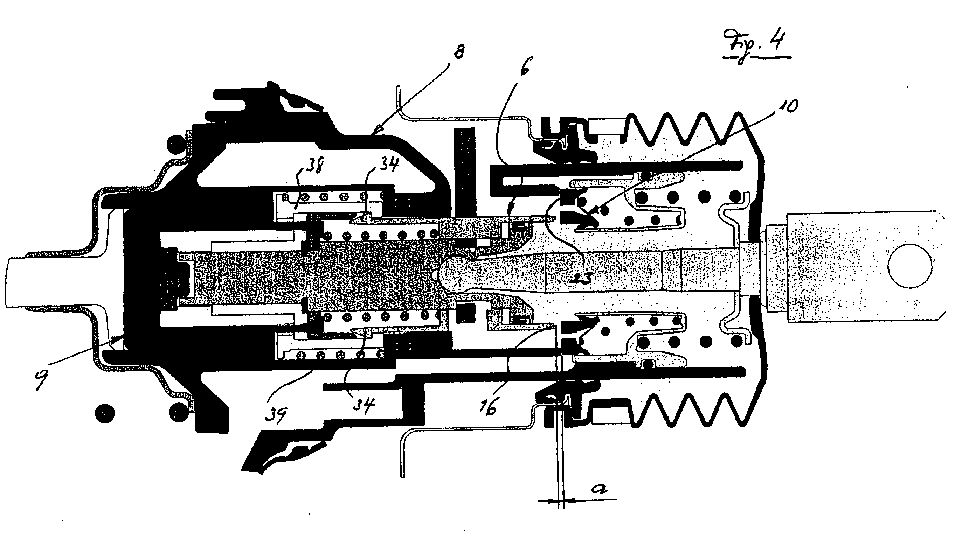

Um die kraftübertragende Verbindung zwischen Hülse 32 und Steuergehäuse 35 bzw. 8 bei einer Relativbewegung des Betätigungsteiles 31 gegenüber dem Steuergehäuse 35 bzw. 8, die entgegen der Betätigungsrichtung stattfindet und als Rückhub bezeichnet wird, zu lösen, ist schließlich ein ringförmiges Abschaltelement 37 vorgesehen, das am Betätigungsteil 31 angeordnet und im Bauteil 35 geführt ist. Das Abschaltelement 37 ist in seinem den Rasthaken 34 zugewandten Bereich mit Schrägen versehen, die mit entsprechend geformten Schrägen an den Rasthaken 34 zusammenwirken und eine Verstellung der Rasthaken 34, im gezeigten Beispiel radial nach innen, sicherstellen. Durch die radiale Verstellung der Rasthaken 34 werden diese außer Eingriff mit dem Steuergehäuse 8 bzw. 35 gebracht, so daß die Hülse 32 unter der Vorspannung der vorhin erwähnten Feder 33 am Betätigungsteil 31 zur Anlage kommt. Durch die beschriebene Rückwärtsbewegung des Ventilkolbens 6, die u. a. durch eine Verformung der Reaktionsscheibe 9 und der Kolbenstangenrückholfeder 18 verursacht wird, wird der Ventilkörper 10 des Steuerventils 5 in der Zeichnung nach rechts verschoben, so daß der erste Dichtsitz 15 geöffnet wird und die Arbeitskammer 3 mit der Unterdruckkammer 2 verbunden und somit evakuiert wird. Die beschriebene Rückhubstellung ist in Fig. 3 dargestellt.

Bei der in Fig. 4 dargestellten zweiten Ausführung des Erfindungsgegenstandes sind mechanische Mittel vorgesehen, die in Abhängigkeit von der Ausgangskraft des Bremskraftverstärkers bzw. der Verformung der Reaktionsscheibe 9 eine axiale Verstellung des Angriffspunktes der Rasthaken 34 am Steuergehäuse 8 bzw. Änderungen des vorbestimmbaren Abstands zwischen dem zweiten Dichtsitz 16 und der Dichtfläche 23 des Ventilkörpers 10 ermöglichen. Der Abbildung ist zu entnehmen, daß die Rasthaken 34 mit einer Schiebehülse 38 in kraftübertragenden Eingriff gebracht werden, die im Steuergehäuse 8 geführt und mittels einer radial außen angeordneten zweiten Feder 39 vorgespannt ist. Durch die Verformung der bei der Betätigung unter Druck stehenden Reaktionsscheibe 9 wird die Schiebehülse 38 nach rechts verschoben, so daß dann der Eingriff bereits bei einer geringeren Bremspedalantrittsgeschwindigkeit bzw. einem kürzeren Differenzweg zwischen Ventilkolben 6 und Steuergehäuse 8 erfolgt, als dies bei noch unbelasteter Reaktionsscheibe 9 der Fall ist.

## Patentansprüche

1. Pneumatischer Bremskraftverstärker für Kraftfahrzeuge mit einem Verstärkergehäuse (1), dessen Innenraum durch eine bewegliche Wand in eine erste Kammer (Unterdruckkammer 2) und eine zweite Kammer (Arbeitskammer 3) unterteilt ist, sowie mit einem Steuergehäuse (8), in dem ein eine auf die bewegliche Wand einwirkende pneumatische Druckdifferenz steuerndes, mittels einer Betätigungsstange (7) betätigbares (5) Steuerventil angeordnet ist, das einen am Steuergehäuse (8) ausgebildeten ersten Dichtsitz (15), einen an einem Ventilkolben (6) ausgebildeten zweiten Dichtsitz (16) sowie einen mit beiden Dichtsitzen (15,16) zusammenwirkenden elastischen Ventilkörper (10) aufweist, wobei Mittel (34,35,36) vorgesehen sind, die bei einer schnellen Betätigung des Steuerventils (5) einen sprunghaften Anstieg der vom Bremskraftverstärker aufgebrachten Verstärkungskraft gewährleisten, **dadurch gekennzeichnet, dass** der Ventilkolben (6) zweiteilig ausgebildet ist und aus einem mit der Betätigungsstange (7) zusammenwirkenden ersten Teil (Betätigungsteil (31)) sowie einem durch das erste Teil (31) verschiebbaren, den zweiten Dichtsitz (16) tragenden zweiten Teil (Hülse (32)) besteht, wobei die Mittel (34, 35, 36) bei einem vorbestimmbaren Abstand (a) des zweiten Dichtsitzes (16) vom Ventilkörper (10 bzw. 23) eine kraftübertragende Verbindung des zweiten Teiles (32) mit dem Steuergehäuse (8 bzw. 14, 35) ermöglichen und ihre Wirkung durch eine Bewegung des Ventilkolbens (6) entgegen der Betätigungsrichtung des Steuerventils (5) abschaltbar ist.

2. Bremskraftverstärker nach Anspruch 1 **dadurch gekennzeichnet, daß** das zweite Teil (32) am ersten Teil (31) unter Vorspannung einer Feder (33) axial anliegt, die sich am Steuergehäuse (8 bzw. 14, 35) abstützt.

3. Bremskraftverstärker nach Anspruch 1 oder 2 **dadurch gekennzeichnet, daß** die Mittel durch elastische Rasthaken (34) gebildet sind, die eine am Steuergehäuse oder an einem mit dem Steuergehäuse (8) zusammenwirkenden Bauteil (35) ausgebildete radiale Stufe (36) bzw. im Steuergehäuse ausgebildete Ausnehmungen hintergreifen und dadurch ein Mitnehmen des zweiten Teiles (32) vom Steuergehäuse (8) ermöglichen.

4. Bremskraftverstärker nach Anspruch 3 **dadurch gekennzeichnet, daß** das Lösen der kraftübertragenden Verbindung durch radiales Verstellen der Rasthaken (34) erfolgt.

5. Bremskraftverstärker nach Anspruch 4 **dadurch gekennzeichnet, daß** zum Lösen der kraftübertragenden Verbindung die Rasthaken (34) mit einem Abschaltelement (37) zusammenwirken, das am ersten Teil (31) angeordnet ist.

6. Bremskraftverstärker nach einem der Ansprüche 3 bis 5 **dadurch gekennzeichnet, daß** ein zweites Mittel (38) vorgesehen ist, das in Abhängigkeit von der Ausgangskraft des Bremskraftverstärkers Änderungen des vorbestimmbaren Abstands ermöglicht.

7. Bremskraftverstärker nach einem der Anspruch 6 **dadurch gekennzeichnet, daß** das zweite Mittel durch eine Schiebehülse (38) gebildet ist, die mit einer sowohl die Betätigungskraft als auch die Verstärkungskraft des Bremskraftverstärkers auf ein Ausgangsglied (Druckstange (12)) übertragenden elastischen Reaktionsscheibe (9) zusammenwirkt und unter vorspannung einer zweiten Feder (39) im Steuergehäuse (8 bzw. 14) begrenzt verschiebbar geführt ist.

## Claims

1. Pneumatic brake force booster for automotive vehicles including a booster housing (1) whose interior is subdivided by a movable wall into a first chamber (vacuum chamber 2) and a second chamber (working chamber 3), and a control housing (8) in which a control valve (5) is accommodated that controls a pneumatic pressure differential acting upon the movable wall and is operable by an actuating rod (7), said control valve including a first sealing seat (15) designed on the control housing (8), a second sealing seat (16) designed on a valve piston (6) and an elastic valve member (10) that cooperates with the two sealing seats (15, 16), and means (34, 35, 36) are provided which ensure an abrupt rise of the boosting force generated by the brake force booster upon quick actuation of the control valve (5),
**characterized in that** the valve piston (6) has a two-part design and is comprised of a first part (actuating part (31)) which cooperates with the actuating rod (7) and a second part (sleeve (32)) that is displaceable by the first part (31) and carries the second sealing seat (16), wherein said means (34, 35, 36), with a predeterminable distance (a) between the second sealing seat (16) and the valve member (10 or 23, respectively), permit a force-transmitting connection between the second part (32) and the control housing (8 or, respectively, 14, 35), and their effect can be deactivated by a movement of the valve piston (6) in opposition to the actuating direction of the control valve (5).

2. Brake force booster as claimed in claim 1,
**characterized in that** the second part (32) bears axially against the first part (31) under the bias of a spring (33) which is supported on the control housing (8 or, respectively, 14, 35).

3. Brake force booster as claimed in claim 1 or claim 2,
**characterized in that** the means are elastic catches (34) which backgrip a radial step (36) provided at the control housing or at a component (35) cooperating with the control housing (8) or, respectively, backgrip recesses provided in the control housing, and thereby permit entrainment of the second part (32) by the control housing (8).

4. Brake force booster as claimed in claim 3,
**characterized in that** disengagement of the force-transmitting connection is effected by radial readjustment of the catches (34).

5. Brake force booster as claimed in claim 4,
**characterized in that**, for disengagement of the force-transmitting connection, the catches (34) cooperate with a disengaging element (37) which is arranged on the first part (31).

6. Brake force booster as claimed in any one of claims 3 to 5,
**characterized in that** a second means (38) is provided and permits variations of the predeterminable distance as a function of the output force of the brake force booster.

7. Brake force booster as claimed in claim 6,
**characterized in that** the second means is configured as a sliding sleeve (38) which cooperates with an elastic reaction plate (9) that transmits both the actuating force and the boosting force of the brake force booster to an output member (push rod (12)) and is slidable within limits in the control housing (8 or 14, respectively) under the bias of a second spring (39).

## Revendications

1. Servofrein pneumatique pour véhicules automobiles comportant un boîtier de servofrein (1) dont le volume intérieur est divisé par une paroi mobile en une première chambre (chambre sous dépression 2) et une deuxième chambre (chambre de travail 3), ainsi qu'un boîtier de commande (8) dans lequel est disposée une soupape de commande (5) commandant une pression différentielle pneumatique agissant sur la paroi mobile et actionnable au moyen d'une tige d'actionnement (7), laquelle comporte un premier siège d'étanchéité (15) réalisé sur le boîtier de commande (8), un deuxième siège d'étanchéité (16) réalisé sur un piston de soupape (6), ainsi qu'un corps de soupape (10) élastique coopérant avec les deux sièges d'étanchéité (15, 16), des moyens (34, 35, 36) étant prévus qui garantissent, en cas d'actionnement rapide de la soupape de commande (5), une montée brusque de la force d'amplification appliquée par le servofrein, **caractérisé en ce que** le piston de soupape (6) est réalisé en deux parties et est constitué d'une première partie (partie d'actionnement (31)) coopérant avec la tige d'actionnement (7) ainsi que d'une deuxième partie (manchon (32)) pouvant coulisser sous l'effet de la première partie (31) et portant le deuxième siège d'étanchéité (16), les moyens (34, 35, 36) permettant, avec une distance (a) pouvant être prédéterminée du deuxième siège d'étanchéité (16) par rapport au corps de soupape (10 ou 23), une liaison transmettant les forces entre la deuxième partie (32) et le boîtier de commande (8, 14 ou 35), et leur action pouvant être désactivée par un mouvement du piston de soupape (6) dans le sens contraire au sens d'actionnement de la soupape de commande (5).

2. Servofrein selon la revendication 1, **caractérisé en ce que** la deuxième partie (32) s'applique axialement contre la première partie (31) avec précontrainte d'un ressort (33) qui prend appui sur le boîtier de commande (8, 14 ou 35).

3. Servofrein selon la revendication 1 ou 2, **caractérisé en ce que** les moyens sont formés par des crochets d'encliquetage (34) élastiques qui passent derrière un épaulement radial (36) réalisé sur le boîtier de commande ou sur un composant (35) coopérant avec le boîtier de commande (8), ou derrière des évidements réalisés dans le boîtier de commande, et permettent ainsi un entraînement de la deuxième partie (32) par le boîtier de commande (8).

4. Servofrein selon la revendication 3, **caractérisé en ce que** la suppression de la liaison transmettant les forces s'effectue par déplacement radial des crochets d'encliquetage (34).

5. Servofrein selon la revendication 4, **caractérisé en ce que** pour supprimer la liaison transmettant les forces, les crochets d'encliquetage (34) coopèrent avec un élément de désactivation (37) qui est disposé sur la première partie (31).

6. Servofrein selon l'une des revendications 3 à 5, **caractérisé en ce qu'**il est prévu un deuxième moyen (38) qui permet de modifier la distance pouvant être prédéterminée, en fonction de la force initiale du servofrein.

7. Servofrein selon la revendication 6, **caractérisé en ce que** le deuxième moyen est formé par un manchon coulissant (38) qui coopère avec un disque de réaction (9) élastique transmettant aussi bien la force d'actionnement que la force d'amplification du servofrein à un organe de sortie (tige de pression (12)), et qui est guidé de manière à pouvoir coulisser dans une mesure limitée avec précontrainte d'un deuxième ressort (39) dans le boîtier de commande (8 ou 14).
